# EUROPEAN PATENT SPECIFICATION

(11) **EP 2 208 557 B1**
(45) Date of publication and mention of the grant of the patent: **27.04.2016**
(21) Application number: 08832196.3
(22) Date of filing: 12.09.2008
(51) Int. Cl.: B22F 1/00, B01D 53/14, B01J 23/42, B01J 35/02, B22F 9/14, B82B 1/00, C25C 5/04, F01N 3/08, C25D 3/66, C25B 11/02, B22F 7/04, B01J 37/34, B01J 23/44, B01D 53/32, B01J 35/00, B82Y 30/00, C25D 5/18, C25D 1/00

(54) **NOBLE METAL NANOSTRUCTURE AND ELECTROCHEMICAL REACTOR**
EDELMETALLNANOSTRUKTUR UND ELEKTROCHEMISCHER REAKTOR
NANOSTRUCTURE DE MÉTAL NOBLE ET RÉACTEUR ÉLECTROCHIMIQUE

(30) Priority: 21.09.2007 JP 2007246277; 17.03.2008 JP 2008068531
(43) Date of publication of application: 21.07.2010
(73) Proprietor: National Institute of Advanced Industrial Science and Technology, Tokyo 100-8921 (JP)
(72) Inventor: HAMAMOTO, Koichi, Nagoya-shi, Aichi 463-8560 (JP); FUJISHIRO, Yoshinobu, Nagoya-shi, Aichi 463-8560 (JP); AWANO, Masanobu, Nagoya-shi, Aichi 463-8560 (JP)
(74) Representative: V.O.
(86) International application number: PCT/JP2008/066564
(87) International publication number: WO 2009/038023

(56) References cited:
- JP-A- 2004 034 228
- JP-A- 2006 045 582
- JP-A- 2006 045 582
- JP-A- 2006 299 336
- US-A- 5 942 099
- US-A1- 2005 229 744

## Description

### TECHNICAL FIELD

The present invention relates to microstructured noble metal nanostructures, a process for producing the same, as well as its use for catalyst material, electrode material and electrochemical elements. More particularly, the present invention relates to a technology that, through the dissolution and reprecipitation of metal by an electrochemical reaction using a solid electrolyte and a molten nitrate salt, produces self-supporting, nanostructured, multidimensional, microstructured noble metal nanostructures of nanometer size. The present invention further relates to microstructured noble metal nanostructures having a multidimensional structure which are obtained with this technology, for example, fine wire-shaped noble metal nanostructures having a wire diameter of nanometer size and novel self-supporting, microstructured noble metal nanostructures comprising particles that have been modified, either at the surface or as a whole, into a concave-and-convex shape, or a protruded shape. The present invention provides a technology for producing microstructured noble metal nanostructures that makes it possible to obtain, without the use of a template, microstructured noble metal nanostructures of nanometer size that are formed in a self-supporting state and that have a multidimensional structure. The present invention also provides various products comprising the microstructured noble metal nanostructures as defined in the appended claims.

### BACKGROUND ART

Due to their high specific surface area and high activity, noble metal microparticles of nanometer size are used as starting materials in a wide range of fields, for example, as electrode materials in various solid polymer fuel cells, solid oxide fuel cells, primary batteries, secondary batteries, capacitors (condensers), and so forth; for various catalysts for combustion assistance and exhaust gas purification; and for antimicrobials and cosmetics.

Spherical noble metal particles of nanometer size have heretofore been synthesized by, for example, processes in which spherical particles are synthesized using a liquid-phase procedure in which a liquid raw material, e.g., of platinum chloride, is employed as the starting material; processes that employ physical crushing; processes in which the noble metal and a second substance are mixed to form deposition using phase separation; and processes in which the noble metal is ion-implanted in a parent material and the parent material is etched to deposit the noble material at the surface (refer to Patent Reference 1).

These prior technologies make possible the relatively facile synthesis of simple spherical particles of nanometer size, but it is quite difficult with these prior technologies to form microstructured noble metal nanostructures of nanometer size that have a multidimensional structure.

The heretofore most effective processes for synthesizing fine wire-shaped noble metal structures of nanometer size are those that obtain a mesoporous structure that use, for example, a block copolymer material (refer to Non-patent Reference 1), and a fine wire-shaped noble metal structure formed by using a noble metal starting material in liquid form as a porous template of nanometer size formed in anodically oxidized alumina (refer to Non-patent Reference 2).

However, while the processes that produce a noble metal structure through the use of a template as described above do offer the possibility of obtaining multidimensional structures of relatively uniform size, the active surface of the noble metal is inevitably buried in the interior of the template, which has led to the problem that such structures cannot be effectively utilized.

In addition, since the multidimensional structures cannot be maintained when the template is removed in the processes using the template described above, it is quite difficult to obtain a noble metal structure in a self-supported state (i.e., in a free configuration with the template removed) that enables the full utilization of the high specific surface areas of multidimensional structures. As a consequence, the development of a technology that can produce a novel noble metal nanostructure of nanometer size has been strongly desired.

JP 2006 045582 A discloses a spongy platinum nanostructure having a multidimensional spherical structure having a diameter of 20-100 nm which is formed by reducing a preliminarily added chloroplatinic acid alkali metal salt into a molecular mold structure generated by mixing two components of two kinds of non-ionic surfactants or an ionic surfactant and a non-ionic surfactant with a reducing agent such as a boron hydride salt. The nanostructures are stated to be applied to a catalyst and an electrode.

Similarly, US 2005/229744 A1 discloses a noble metal nanotube of, e.g., platinum having a tubular form with an outer diameter of about 5-7 nm and ≥10nm in length and the use thereof as a catalyst for fuel cells. The noble metal nanotubes are outlined as being produced by reducing a noble metal salt by using, as template, a structure obtained by mixing at least two kinds of surfactants and noble metal salt solution under conditions so as to lead to a nanotube of a specific size.

In the development of devices, e.g., fuel cells, that utilize noble metals, noble metal particles, e.g., platinum particles, of nanometer size are used in some instances in order to increase specific surface area of the noble metal with the goal of boosting reaction efficiency of the electrode or catalyst.

The noble metal particles, e.g., platinum particles, of nanometer size that are used as such electrode or catalyst materials can exhibit high activities. However, in the case of devices fabricated using such noble metal particles, e.g., platinum particles, the, for example, platinum particles of nanometer size undergo particle growth as the operating time increases, resulting in an unavoidable performance deterioration. As a consequence, there is also a strong desire in the pertinent technical fields for the development of a regeneration technology (particle re-microfine-sizing) that would solve this problem of performance deterioration.

Patent Reference 1: Japanese Patent 3,635,325
Non-patent Reference 1: Microporous and Mesoporous Materials, Volume 48 (2001), pp. 171-179.
Non-patent Reference 2: Jpn. J. Appl. Phys., Volume 36 (1997), pp. 7791-7795.

Given such circumstances, and considering the prior art described above, the present inventors sought to reliably solve the problems described above and to develop a technology that could synthesize a self-supporting, multidimensional, microstructured noble metal nanostructure of nanometer size without using a template. As a result of extensive and intensive investigations, the present inventors succeeded in developing a novel technology that utilizes an electrochemical reaction and, thereby, achieved the present invention.

### DISCLOSURE OF THE INVENTION

The present invention was pursued in order to solve the problems described above in relation to the prior art and an object of the present invention is to provide a multidimensional noble metal structure of nanometer size, i.e., to provide a self-supporting microstructured noble metal nanostructure having a multidimensional structure of nanometer size, to provide a process for forming this noble metal nanostructure, and to provide inter alia, devices, e.g., electrodes and catalysts that utilize this self-supporting, microstructured noble metal nanostructure.

The present invention, which is directed to solving the problems identified above, comprises the following technical means.
(1) A microstructured noble metal nanostructure having a multidimensional structure of nanometer size comprising primary particles synthesized, without the use of a template, through the dissolution and reprecipitation of a noble metal parent material which constitutes an electrode used in an electrochemical reaction that employs a solid electrolyte and a molten nitrate salt, wherein: 1) the microstructured noble metal nanostructure comprises particles with diameters of 1 to 15 nm; 2) the multidimensional structure has a fine wire shape having a wire diameter of 5 to 200 nm, or a protruded structure or convex-and-concave structure having a surface roughness of 5 to 200 nm, or a spherical structure having a diameter of 5 to 200 nm; and 3) the multidimensional structure of nanometer size is formed in a self-supporting state; and wherein the noble metal parent material has been dissolved and reprecipitated by the electrochemical reaction.
(2) The microstructured noble metal nanostructure according to (1) above, wherein the noble metal is platinum, gold, palladium, or silver.
(3) A process of producing a microstructured noble metal nanostructure defined in (1) above, which process comprises passing alternating electric current through a preliminarily arranged reaction element constituted by an electrode comprising a noble metal parent material which is to be microstructured, a counterelectrode, and an oxygen ion-conductive solid electrolyte layer, to produce, without the use of a template, a microstructured noble metal nanostructure having a multidimensional structure of nanometer size, and thereby microstructuring the surface or entire body of the noble metal parent material by reaction thereof at a reaction site in the element to be reacted, wherein either a molten nitrate salt or a molten nitrate salt and oxygen ion conductor is used as the reaction site, and wherein said noble metal parent material undergoes dissolution and reprecipitation by the resultant electrochemical reaction.
(4) The process for producing the microstructured noble metal nanostructure according to (3) above, wherein a microstructured noble metal nanostructure having a multidimensional structure of nanometer size is produced by passing alternating electric current through a reaction element that has two or more electrodes, at least one thereof comprising a noble metal parent material to be microstructured residing in contact with a reaction site, and that is constructed to be capable of electrical continuity through a conductor disposed between or among the electrodes, to thereby microstructure the surface or entire body of the noble metal parent material by reaction thereof at the reaction site in the element to be reacted.
(5) The process for producing the microstructured noble metal nanostructure according to (3) or (4) above, wherein alternating electric current is passed through a reaction element that has two or more electrodes, at least one thereof comprising a noble metal parent material to be microstructured residing in contact with a reaction site, and that is constructed to be capable of electrical continuity through a conductor disposed between or among the electrodes, to thereby microstructure the noble metal parent material by reaction thereof at the reaction site in the element to be treated and produce a microstructured noble metal nanostructure having a multidimensional structure of nanometer size at the noble metal parent material or at the surface of a different material disposed in proximity to the noble metal parent material electrode or at both locations.
(6) The process for producing the microstructured noble metal nanostructure according to (3), (4) or (5) above, wherein the shape of the microstructure is controlled by changing the conditions of current passage for reaction.
(7) The process for producing the microstructured noble metal nanostructure according to (3), (4) or (5) above, wherein the reaction is promoted by efficiently guiding the molten nitrate salt to the reaction site using a molten nitrate salt attractant material.
(8) An electrochemical element for carrying out an electrochemical reaction on a target to be treated, comprising an ion conductor and two or more electrodes that are opposite each other with the ion conductor therebetween, which electrodes are composed of electrodes that use the microstructured noble metal nanostructure having a multidimensional structure of nanometer size as defined in (1) or (2) above, and have, as a reaction site, an interface between the microstructured noble metal nanostructure either a molten nitrate salt or a molten salt and an oxygen ion conductor.
(9) The electrochemical element according to (8) above, which has at least one noble metal electrode that can increase the degradation capacity for a treatment target through an increase in reaction electrode porosity and reaction electrode surface area brought about by application of an electric field for operating the electrochemical element.
(10) The electrochemical element according to (8) or (9) above, wherein the molten salt that constitutes or forms the reaction site also functions as a nitrogen oxide adsorptive substance.
(11) The electrochemical element according to (9) or (10) above, wherein the molten nitrate salt is at least one kind selected from potassium nitrate, sodium nitrate, calcium nitrate, barium nitrate, silver nitrate, lead nitrate, ammonium nitrate, nickel nitrate and cobalt nitrate, and wherein sodium carbonate, potassium chlorate, and sodium peroxide is preferably added to the molten nitrate salt as a reaction promoter.
(12) The electrochemical element according to (8) or (9) above, wherein a nitrogen oxide adsorptive substance is disposed within or adjacent to the microstructured noble metal nanostructure electrode.
(13) The electrochemical element according to (10) or (12) above, wherein the nitrogen oxide adsorptive substance contains at least one kind selected from Na, K, Ba, Rb, Cs, and Ca and the content thereof is 5 to 50 mol% with respect to the total nitrogen oxide adsorptive substance.
(14) An electrode material, comprising the microstructured noble metal nanostructure having a multidimensional structure of nanometer size defined in (1) or (2) above.
(15) A catalyst material, comprising the microstructured noble metal nanostructure having a multidimensional structure of nanometer size defined in (1) or (2) above.
(16) A nitrogen oxide conversion reactor, comprising an electrochemical reactor in which the electrochemical element defined in any one of (8) to (13) above is disposed.

The present invention is described in more detail in the following.

The present invention encompasses a microstructured noble metal nanostructure having a multidimensional structure of nanometer size comprising primary particles synthesized, without the use of a template, through the dissolution and reprecipitation of a noble metal parent material which constitutes an electrode used in an electrochemical reaction that employs a solid electrolyte and a molten nitrate salt, wherein the microstructured noble metal nanostructure comprises particles with diameters of 1 to 15 nm; the multidimensional structure has a fine wire shape having a wire diameter of 5 to 200 nm, or a protruded structure or convex-and-concave structure having a surface roughness of 5 to 200 nm, or a spherical structure having a diameter of 5 to 200 nm; and the multidimensional structure of nanometer size is formed in a self-supporting state; and wherein the noble metal parent material has been dissolved and reprecipitated by the electrochemical reaction.

The present invention also encompasses a process for producing, without the use of a template, the aforementioned microstructured noble metal nanostructure having a multidimensional structure, which process comprises passing alternating electric current through a preliminarily arranged reaction element constituted by an electrode comprising a noble metal parent material which is to be microstructured, a counterelectrode, and an oxygen ion-conductive solid electrolyte layer, to thereby microstructure the surface or entire body of the noble metal parent material by reaction thereof at a reaction site in the element to be reacted, wherein either a molten nitrate salt or a molten nitrate salt and oxygen ion conductor is used as the reaction site, and wherein said noble metal parent material undergoes dissolution and reprecipitation by the resultant electrochemical reaction.

In a preferred embodiment of the present invention, the microstructured noble metal nanostructure having a multidimensional structure is produced by passing alternating electric current through a reaction element that has two or more electrodes, at least one thereof comprising a noble metal parent material to be microstructured residing in contact with a reaction site, and that is constructed to be capable of electrical continuity through a conductor disposed between or among the electrodes, to thereby microstructure the surface or entire body of the noble metal parent material by reaction thereof at the reaction site in the element to be reacted.

In another preferred embodiment of the present invention, alternating electric current is passed through a reaction element that has two or more electrodes, at least one thereof comprising a noble metal parent material to be microstructured residing in contact with a reaction site, and that is constructed to be capable of electrical continuity through a conductor disposed between or among the electrodes, to thereby microstructure the noble metal parent material by reaction thereof at the reaction site in the element to be reacted and produce a microstructured noble metal nanostructure having a multidimensional structure at the surface of a different material disposed in proximity to the noble metal parent material electrode or at both locations.

In preferred embodiments of the process according to the present invention, the shape of the microstructure is controlled by changing the conditions of current passage for reaction; and the reaction is promoted by efficiently guiding the molten nitrate salt to the reaction site using a molten nitrate salt attractant material.

The present invention further encompasses an electrochemical element for carrying out an electrochemical reaction on a target to be treated, comprising: an ion conductor and two or more electrodes that are opposite each other with the ion conductor therebetween, which electrodes are composed of electrodes that use the aforementioned microstructured noble metal nanostructure having a multidimensional structure comprising primary particles, and have, as a reaction site, an interface between the microstructured noble metal nanostructure and either a molten nitrate salt or a molten nitrate salt and an oxygen ion conductor.

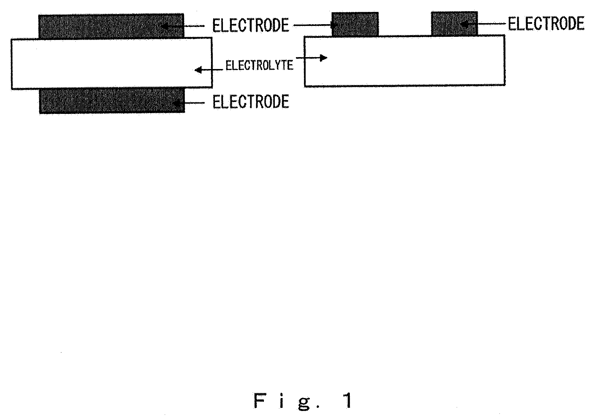

An example of a basic embodiment of the electrochemical element of the present invention is an electrochemical element comprising an electrode that uses a noble metal parent material (also referred to below as the metal parent material) for forming a multidimensional structure of nanometer size, a counterelectrode therefor, and a solid electrolyte layer that exhibits oxygen ion conductivity, as shown in Figures 1a and 1b.

For example, platinum, gold, palladium, or silver is used as the noble metal in the electrode. While there are no particular limitations on the solid electrolyte layer that exhibits oxygen ion conductivity, this solid electrolyte layer desirably exhibits a high oxygen ion conductivity and is satisfactorily resistant to the molten salt at the melting point temperature of the molten nitrate salt that is used as a reaction site for nanostructuring the metal parent material.

The molten nitrate salt that functions with respect to the electrode and solid electrolyte layer as a reaction site for nanostructuring the electrode is disposed proximal to the electrode comprising the metal parent material so as to cover this electrode. Particularly suitable molten nitrate salts are sodium nitrate, potassium nitrate, calcium nitrate, barium nitrate, silver nitrate, lead nitrate, ammonium nitrate, nickel nitrate, and cobalt nitrate.

Sodium carbonate, potassium chlorate, sodium peroxide, and so forth, is preferably added to the aforementioned molten nitrate salt as a reaction promoter. In this case, a molten nitrate salt attractant material that attracts the molten nitrate salt is desirably uniformly disposed, by admixture, plating, or so forth, at or in the electrode that uses the metal parent material; this molten nitrate salt attractant material can be exemplified by Ni, NiO, and BaCO₃.

With regard to the mechanism of the reaction that nanostructures the noble metal parent material, when a nitrate molten salt is present in an electrode-proximal position, a strong metal dissolving reaction site is then formed in the molten nitrate salt by the application of an electric field to the two electrodes disposed with the conductive material interposed therebetween. It is thought that when a noble metal parent material that is to be microstructured is present here, this metal dissolves although the strength of the metal dissolving reaction site varies with the field.

When an alternating current electric field is applied to the electrodes, the amount of noble metal parent material dissolution at the electrode present within the molten nitrate salt undergoes a repetitive variation in conformity to the variation in the strength of the dissolving ambient that accompanies the variation in the alternating current field, and it is thought that as a consequence, dissolution and deposition occur continuously and particles of nanometer size are synthesized as a result.

As a consequence, for example, the rate and amount of dissolution and redeposition can be freely varied by changing, for example, the temperature and the frequency modulation of the alternating current electric field, and microstructured noble metal bodies having multidimensional structures with different shapes can be obtained based on differences in the deposition process.

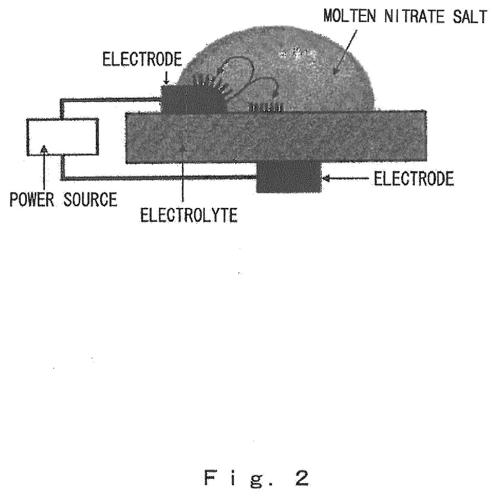

Figure 2 shows in schematic form the situation during the electrochemical reaction, for an example, of the structure of an electrochemical cell for the multidimensional structuring of metal in accordance with an embodiment of the present invention. By applying an electric field to the two electrodes in Figure 2, the noble metal is dissolved and redeposited in the presence of the molten nitrate salt functioning as the reaction site to form a microstructured noble metal body.

This redeposition may occur not only on the surface of or within the noble metal parent material, but this deposition may also occur on a different material that is disposed in proximity to the reaction site. As a consequence, by controlling location and method of the deposition through the application of technologies such as drawing or stamping with the noble metal parent material in the reaction site, not only can the noble metal parent material itself be microstructured, but it becomes possible to form a macrostructure of microstructured noble metal at a freely selected location on the different material.

The microstructured noble metal nanostructure according to the present invention is a microstructure of nanometer size that has a multidimensional structure comprising primary particles and is characterized in that 1) it comprises particles with diameters of about 1 to 15 nm; 2) the multidimensional structure has a) a fine wire shape having a wire diameter of nanometer size of about 5 to 200 nm, or b) a protruded structure or convex-and-concave structure having a surface roughness of about 5 to 200 nm, or c) a spherical structure having a diameter of nanometer size of about 5 to 200 nm; and 3) the multidimensional structure is formed in a self-supporting state without the use of a template. Here, the references to diameters of about 1 to 15 nm and to a nanometer size of about 5 to 200 nm are defined as meaning that the majority of the particles and wire shapes, respectively, are within these ranges and not as meaning that aminority thereof outside this range are completely absent.

It is preferred for the electrochemical element of the present invention that it has at least one noble metal electrode that can increase the degradation capacity for a target to be treated through an increase in reaction electrode porosity and reaction electrode surface area brought about by application of an electric field for operating the electrochemical element, and that the molten nitrate salt constituting the reaction site also functions as a nitrogen oxide adsorptive substance.

It is also preferred for the electrochemical element of the present invention that the nitrogen oxide adsorptive substance is disposed within or adjacent to the microstructured noble metal electrode; that the nitrogen oxide adsorptive substance contains at least one kind selected from Na, K, Ba, Rb, Cs, and Ca and the content thereof is 5 to 50 mol% with respect to the total nitrogen oxide adsorptive substance. Preferably, the treatment target upon which an electrochemical reaction is carried out using the electrochemical element of the present invention is an exhaust gas from an internal combustion engine and the operating temperature region is not more than 400°C.

The present invention provides catalyst materials and electrode materials comprising the aforementioned microstructured noble metal nanostructure having a multidimensional structure of nanometer size and also provides a nitrogen oxide conversion reactor (electrochemical reactor) that contains the previously described electrochemical element as a structural component. In the context of the present invention, a microstructure having a multidimensional structure refers to a three dimensional microstructure of nanometer size that does not have a region buried in the interior of a template.

By utilizing the aforementioned electrochemical reactor as the reaction site for a microstructured noble metal nanostructure, a microstructured noble metal nanostructure can be synthesized in accordance with the present invention by the application of an alternating current electric field to the electrodes. Since dissolution and redeposition of the metal constituting the electrode occurs repetitively in conformity to the alternating current electric field when an alternating current electric field is applied to the electrodes, the microstructured noble metal nanostructure of nanometer size accrues the exceptional functional effect of enabling particles of nanometer size to be regenerated (particle re-microfine-sizing). Multidimensional structures of nanometer size can be synthesized in various shapes by changing the frequency modulation of the alternating current electric field that is applied to the electrodes, the temperature, the nitrogen oxide concentration, the amount of oxygen release, and the rate and extent of dissolution and deposition.

The present invention exhibits the following effects.
(1) A self-supporting, microstructured noble metal nanostructure having a multidimensional structure can be provided.
(2) Noble metal microparticles of nanometer size can be provided.
(3) A noble metal electrode that has a high specific surface area can be provided.
(4) It is possible to convert the bulk noble metal to a three dimensional nanostructure.
(5) It is possible to regenerate a degraded-performance electrode in an electrochemical cell.
(6) By forming a high specific surface area electrode, an electrochemical reactor can be provided that makes nitrogen oxide decomposition highly efficient.
(7) Highly active catalysts based on noble metal that has been given a higher specific surface area can be provided.
(8) It is possible to provide a highly dispersed disposition of the NOx adsorbents to be used in catalysts.
(9) It is possible to provide a multidimensional structured electrode for fabricating high-capacity fuel cells.
(10) By effecting the wire-shaped structuring of an electrode, it is possible to form electrodes for sensors that will exhibit even higher sensitivities.

### BRIEF DESCRIPTION OF THE DRAWINGS

Figure 1 shows an example of an electrochemical element according to the present invention for multidimensionally structuring an electrode;
Figure 2 shows an example of the reaction mechanism in a structural example of a model electrochemical cell during the multidimensional structuring of a metal;
Figure 3 shows an example of a platinum electrode that has been microstructured by an electrochemical reaction;
Figure 4 shows an example of a platinum and electrolyte composite that has been microstructured into a network form by an electrochemical reaction;
Figure 5 shows an example of a platinum electrode that has a wire-shaped structure and that has been microstructured by an electrochemical reaction;
Figure 6 shows the transmission electron microscopic image and the diffraction pattern of a fine wire-shaped platinum nanostructure comprised of platinum nanoparticles;
Figure 7 shows the results of energy-dispersive x-ray spectroscopic analysis of a fine wire-shaped platinum nanostructure comprised of platinum nanoparticles;
Figure 8 shows an example of a platinum electrode whose surface has been microstructured into a concave-and-convex structure by an electrochemical reaction;
Figure 9 shows an example of an Au electrode that has a wire-shaped structure and that has been microstructured by an electrochemical reaction;
Figure 10 shows the change in NO decomposition accompanying platinum electrode microstructuring in an electrochemical element at an operating temperature of 300°C;
Figure 11 shows the temperature dependence and property variation for NO decomposition accompanying platinum electrode microstructuring in an electrochemical element at an operating temperature of 250°C;
Figure 12 shows the change in the average current value and the temperature dependence of NO decomposition accompanying gold electrode microstructuring for an electrochemical element at an operating temperature of 350°C, wherein the white circles show the timewise change in the NO decomposition rate and the black squares show the timewise change in the quantity of current required for NO decomposition flowing through the electrochemical element; and
Figure 13 shows a macrostructure built up from microstructured platinum nanoparticles formed by drawing on a substrate.

### BEST MODE FOR CARRYING OUT THE INVENTION

The present invention is specifically described in the following on the basis of examples, but the present invention is in no way limited by the following examples.

### Example 1

An electrochemical cell was fabricated in this example. Gadolinia-stabilized ceria (also referred to below as "ceria") that had been sintered and densified was used as the oxygen ion-conductive phase substrate that would form the base of an electrochemical cell for the multidimensional structuring of metal. It had a disk shape with a diameter of 20 mm and a thickness of 0.5 mm.

For the electrodes, a mixture of platinum and NiO was disposed by screen printing on both sides of the substrate. The mixing ratio between the platinum and NiO was adjusted to provide a platinum : NiO volume ratio of 70 : 30. This mixture had been screen printed and then heated at 1400°C to form an electrochemical cell.

Platinum lead wires were attached to the thus formed electrochemical cell and these were immersed in a saturated aqueous solution of potassium nitrate and then dried at 100°C and inserted within a quartz tube. While holding them at a temperature of 350°C in a tubular oven, alternating current field with a modulated frequency of 0.3 Hz by a sine wave was applied for 3 hours at ± 3.5 V in an atmosphere of 1000 ppm NO, 2% oxygen, and He for the balance, wherein a gas flow rate was adjusted to 50 mL/minute.

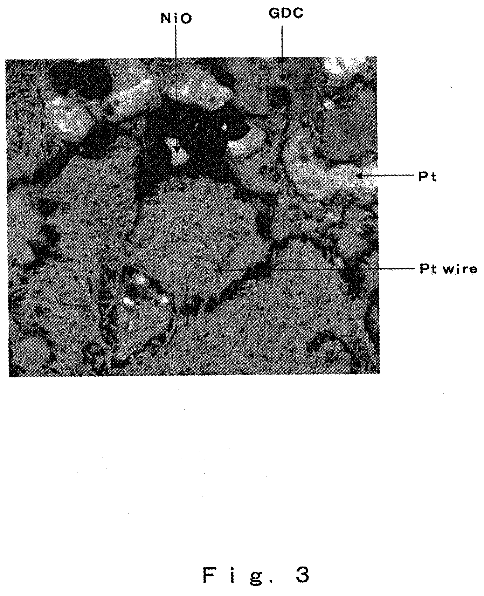

As a result, fine wire-shaped platinum (Pt wire) was found to be formed at the platinum electrode as shown in Figure 3.

### Example 2

Ceria that had been sintered and densified was used as the oxygen ion-conductive phase substrate that would form the base of an electrochemical cell for the multidimensional structuring of metal. It had a disk shape with a diameter of 20 mm and a thickness of 0.5 mm.

For the electrodes, a mixture of platinum and ceria was disposed by screen printing on both sides of the substrate. The mixing ratio between the platinum and ceria was adjusted to provide a platinum : ceria volume ratio of 50 : 50. This mixture had been screen printed and then heated at 1400°C to form an electrochemical cell.

Platinum lead wires were attached to the thus formed electrochemical cell and these were immersed in a saturated aqueous solution of potassium nitrate and then dried at 100°C and inserted within a quartz tube. While holding them at a temperature of 350°C in a tubular oven, alternating current field with a modulated frequency of 0.3 Hz by a sine wave was applied for 3 hours at ± 3.5 V in an atmosphere of 1000 ppm NO, 2% oxygen, and He for the balance, wherein a gas flow rate was adjusted to 50 mL/minute.

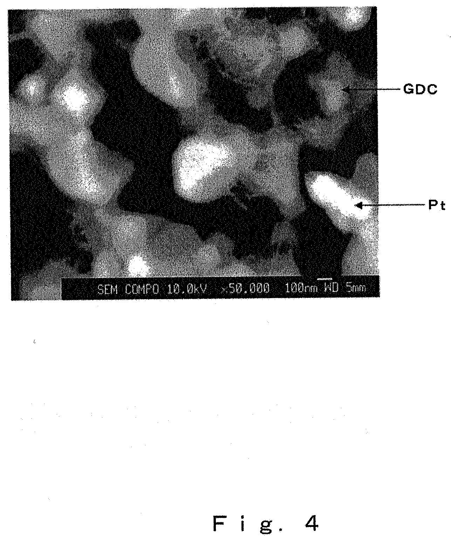

As a result, fine wire-shaped platinum having a line shape of about 10 nm was found to be formed in the ceria/platinum matrix as shown in Figure 4.

### Example 3

Gadolinia-stabilized ceria that had been sintered and densified was used as the oxygen ion-conductive phase substrate that would form the base of an electrochemical cell for the multidimensional structuring of metal. It had a disk shape with a diameter of 20 mm and a thickness of 0.5 mm.

For the electrodes, platinum was disposed by screen printing on both sides of the substrate. The platinum had been screen printed, and then heated at 1400°C to form an electrochemical cell.

This cell was immersed in an aqueous solution of nickel nitrate and a negative charge was applied to the platinum electrodes to plate it with nickel.

Platinum lead wires were attached to the thus formed electrochemical cell and these were immersed in a saturated aqueous solution of potassium nitrate and then dried at 100°C and inserted within a quartz tube. While holding them at a temperature of 350°C in a tubular oven, alternating current field with a modulated frequency of 0.3 Hz by a sine wave was applied for 3 hours at ± 3.5 V in an atmosphere of 1000 ppm NO, 2% oxygen, and He for the balance, wherein a gas flow rate adjusted to 50 mL/minute.

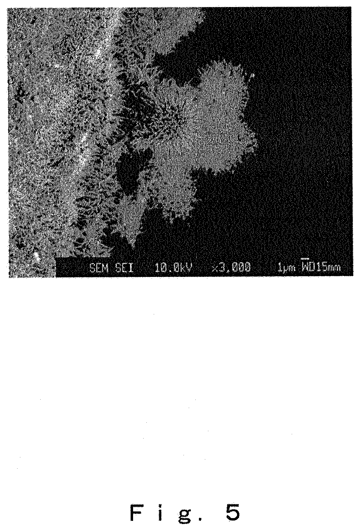

As a result, the platinum was found to have undergone a structural modification into a fine wire-shaped platinum having a line shape of about 10 nm as shown in Figure 5.

### Example 4

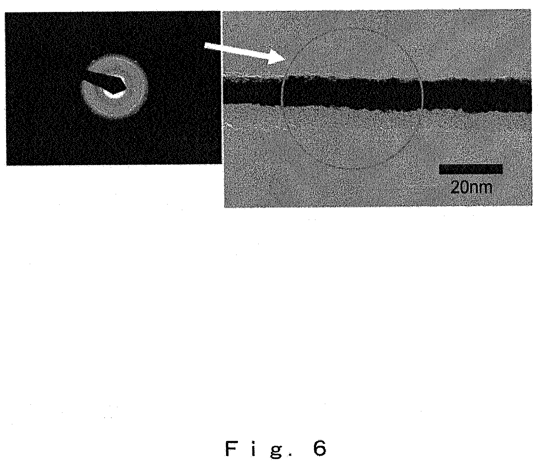

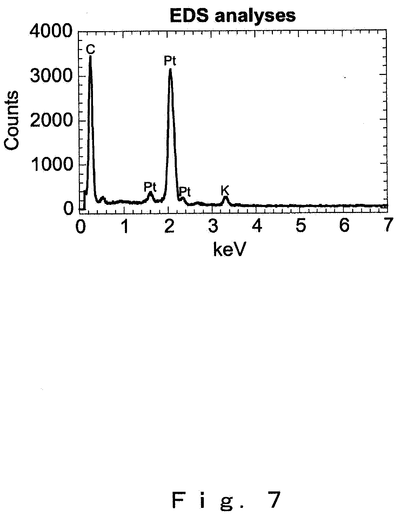

The platinum structured in accordance with Example 3 was observed using a transmission microscope. As shown in Figure 6, the results from the diffraction pattern and transmission image showed that a fine wire specimen had been formed by the random orientation of crystalline particles having diameters of approximately several nanometers. In addition, as shown in Figure 7, elemental analysis by EDS showed it to also be Pt.

### Example 5

Platinum lead wires were attached to an electrochemical cell that had been formed using the same procedure as in Example 3. These were immersed in a saturated aqueous solution of potassium nitrate and then dried at 100°C and inserted within a quartz tube. While holding them at a temperature of 350°C in a tubular oven, alternating current field with a modulated frequency of 0.3 Hz by a sine wave was applied for 3 hours at ± 3.5 V in an atmosphere of 1000 ppm NO, 2% oxygen, and He for the balance, wherein a gas flow rate adjusted to 50 mL/minute.

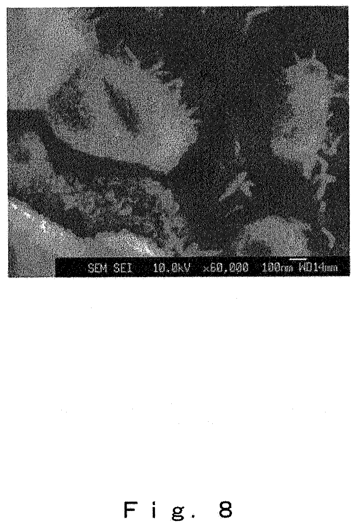

As a result, the platinum was found to have been changed into a platinum structure having a concave-and-convex structure as shown in Figure 8.

### Example 6

Ceria that had been sintered and densified was used as the oxygen ion-conductive phase substrate that would form the base of an electrochemical cell for the multidimensional structuring of metal. It had a disk shape with a diameter of 20 mm and a thickness of 0.5 mm.

For the electrodes, a mixture of Au and NiO was disposed by screen printing on both sides of the substrate. The mixing ratio between the Au and NiO was adjusted to provide an Au : NiO volume ratio of 70 : 30. After the screen printing, the mixture was heated at 1150°C to form an electrochemical cell.

Platinum lead wires were attached to the thus formed electrochemical cell and these were immersed in a saturated aqueous solution of potassium nitrate and then dried at 100°C and inserted within a quartz tube. While holding them at a temperature of 350°C in a tubular oven, alternating current field with a modulated frequency of 0.3 Hz by a sine wave was applied for 6 hours at ± 3.5 V in an atmosphere of 1000 ppm NO, 1% oxygen, and He for the balance, wherein a gas flow rate adjusted to 50 mL/minute.

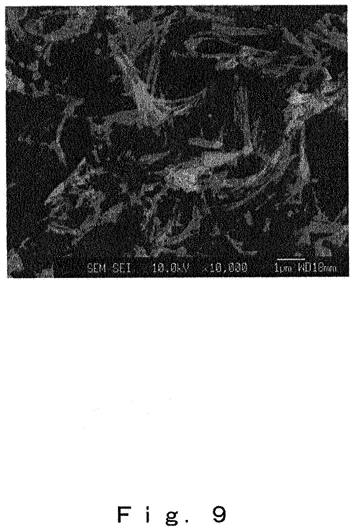

As a result, fine wire-shaped Au was found to be formed at the Au electrode as shown in Figure 9.

### Example 7

This example specifically describes decomposition testing using nitrogen oxide for the treatment target and using an electrochemical reactor having a multidimensionally-structurable noble metal electrode.

Sintered and densified gadolinia (Gd₂O₃)-containing ceria (10 mol% Gd), an oxygen ion-conductive solid electrolyte, was used as the substrate that would form the base of the electrochemical reactor. It had a disk shape with a diameter of 20 mm and a thickness of 0.5 mm.

For the electrodes, a powder was prepared by mixing Pt, NiO, and Gd-containing ceria powders at a volume ratio of 70 : 10 : 20. This powder was converted into a paste using polyethylene glycol, and this paste was printed by screen printing on both sides of the aforementioned substrate. This was baked for 1 hour at 1400°C. Platinum wire was connected to both of the electrodes of the specimen, and this was then immersed in a saturated aqueous solution of potassium nitrate, which functions as a molten salt for microstructuring purposes and as a nitrogen oxide adsorbent, and subsequently dried to provide an element.

One procedure for treating nitrogen oxide using the thus formed electrochemical reactor of the present invention is as follows. The electrochemical reactor was disposed in the target gas to be treated at a temperature of 300°C; platinum wires were fixed as lead wires to the electrodes, and connected through a current amplifier to a function generator; and an alternating current voltage of ± 3.5 V was applied to the electrochemical reactor at a modulated frequency of 0.3 Hz.

For the target gas to be treated, a model combustion exhaust gas of 1000 ppm nitrogen monoxide, 10% oxygen, and helium for the balance was introduced at a flow rate of 50 mL/minute. Before and after introduction into the chemical reaction system, the nitrogen oxide concentration in the target gas to be treated was measured using a chemiluminescent-type NOx meter and the nitrogen and oxygen concentrations were measured by gas chromatography. The nitrogen oxide decomposition rate was determined from the decline in nitrogen oxide, and the power consumption and current density versus the decomposition rate were measured.

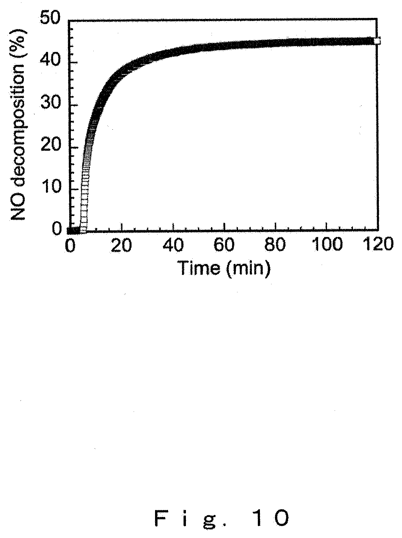

The temperature dependence of NO decomposition is shown in Figure 10. While the current value underwent almost no change, the decomposition rate increased with elapsed time and the decomposition performance stabilized after a certain period of time had elapsed. This was related to the progression of platinum electrode microstructuring, and it was found that the reaction efficiency improved substantially as microstructuring progressed and that the increase in the amount of decomposition stabilized in association with the completion of electrode microstructuring at about 1 hour.

### Example 8

After the measurement according to Example 7, the same electrochemical reactor was disposed in a target gas to be treated at a temperature of 250°C; platinum wires were fixed as lead wires to the electrodes, and connected through a current amplifier to a function generator; and an alternating current voltage of ± 7.0 V was applied to the electrochemical reactor at a modulated frequency of 0.3 Hz.

For the target gas to be treated, a model combustion exhaust gas of 1000 ppm nitrogen monoxide, 20% oxygen, and helium for the balance was introduced at a flow rate of 50 mL/minute. Before and after introduction into the chemical reaction system, the nitrogen oxide concentration in the target gas to be treated was measured using a chemiluminescent-type NOx meter and the nitrogen and oxygen concentrations were measured by gas chromatography. The nitrogen oxide decomposition rate was determined from the decline in nitrogen oxide, and the power consumption and current density versus the decomposition rate were measured.

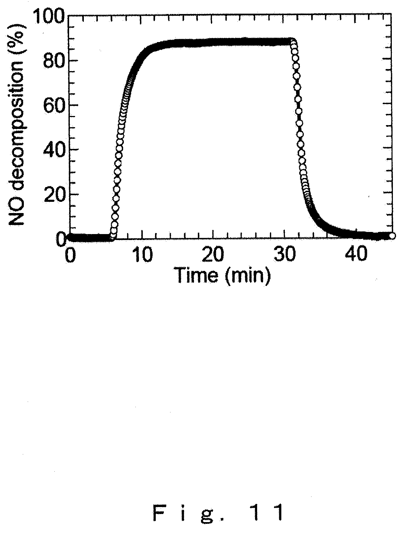

The temperature dependence of NO decomposition accompanying platinum electrode microstructuring in the electrochemical element at an operating temperature of 250°C is shown in Figure 11. The decomposition curve reached the saturation point in a shorter time in the electrochemical reactor in which the electrodes had been microstructured in advance. Due to the microstructuring of these reaction electrodes, 90% of the nitrogen oxide was decomposed at the lower temperature of 250°C, which showed that a substantial lowering of the operating temperature had been made possible.

### Example 9

Sintered and densified gadolinia (Gd₂O₃)-containing ceria (10 mol% Gd), an oxygen ion-conductive solid electrolyte, was used as the substrate that would form the base of the electrochemical reactor. It had a disk shape with a diameter of 20 mm and a thickness of 0.5 mm.

For the electrodes, a powder was prepared by mixing Au, NiO, and Gd-containing ceria powders at a volume ratio of 70 : 10 : 20. This powder was converted into a paste using polyethylene glycol, and this paste was printed by screen printing on both sides of the aforementioned substrate. This was baked for 1 hour at 1400°C. Platinum wire was connected to both of the electrodes of the specimen, and this was then immersed in a saturated aqueous solution of potassium nitrate, which functions as a molten salt for microstructuring purposes and as a nitrogen oxide adsorbent, and subsequently dried to provide an element.

One procedure for treating nitrogen oxide using the thus formed electrochemical reactor of the present invention is as follows. The electrochemical reactor was disposed in the target gas to be treated at a temperature of 350°C; platinum wires were fixed as lead wires to the electrodes, and connected through a current amplifier to a function generator; and an alternating current voltage of ± 3.5 V was applied to the electrochemical reactor at a modulated frequency of 0.3 Hz.

For the target gas to be treated, a model combustion exhaust gas of 1000 ppm nitrogen monoxide, 1% oxygen, and helium for the balance was introduced at a flow rate of 50 mL/minute. Before and after introduction into the chemical reaction system, the nitrogen oxide concentration in the target gas to be treated was measured using a chemiluminescent-type NOx meter and the nitrogen and oxygen concentrations were measured by gas chromatography. The nitrogen oxide decomposition rate was determined from the decline in nitrogen oxide, and the power consumption and current density versus the decomposition rate were measured.

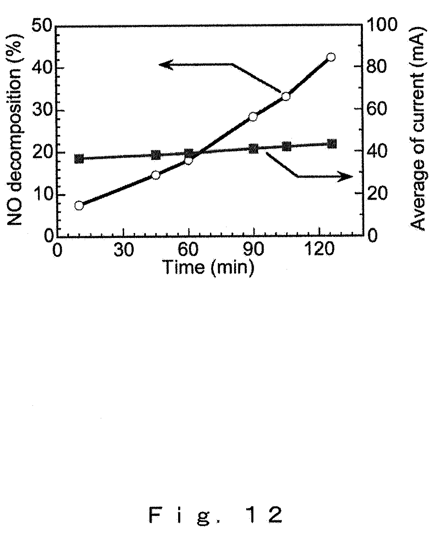

The change in the average current value and the temperature dependence of NO decomposition accompanying gold electrode microstructuring for an electrochemical element at an operating temperature of 350°C are shown in Figure 12. The increase in the NO decomposition rate versus elapsed time was larger than the increase in the current value. This indicated an increase in the decomposition efficiency and showed that the decomposition efficiency underwent an increase in association with the progression of gold electrode microstructuring.

### Example 10

This example specifically describes a macrostructuring process for microstructured noble metal using a multidimensionally-structurable noble metal electrode.

Sintered and densified gadolinia (Gd₂O₃)-containing ceria (10 mol% Gd), an oxygen ion-conductive solid electrolyte, was used as the substrate that would form the base for macrostructuring the microstructured noble metal. It had a disk shape with a diameter of 20 mm and a thickness of 0.5 mm.

To provide the counterelectrode to the electrode for structuring, platinum paste was printed by screen printing as the electrode on one side of the aforementioned substrate; this was baked for 1 hour at 1400°C and then connected a platinum wire to the electrode. A mirror polish was executed on the surface of the substrate on the side opposite the side on which the platinum electrode had been formed, and, with this side up, the substrate was placed on a hot stage that had been heated to 400°C. While in this configuration, potassium nitrate, which functions as a reaction site for microstructuring, was applied so as to provide a liquid droplet in the molten state, and the platinum wire for microstructuring was brought into a probe-like point contact with this region.

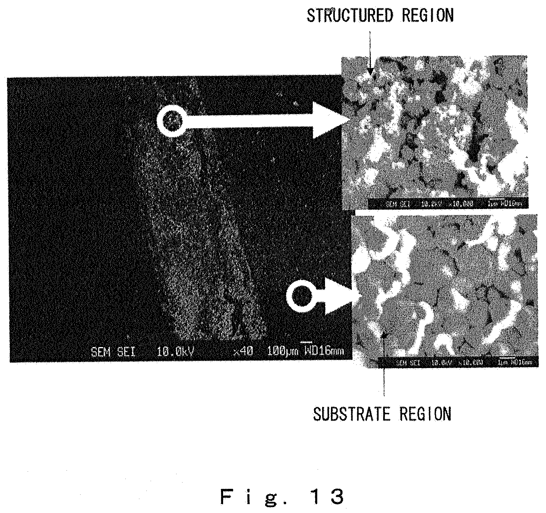

A platinum nanostructure was then formed on the substrate surface by moving the platinum wire on the substrate while applying a voltage of 3 V to the printed-on electrode and the point-contacted platinum wire. After cleaning the resulting substrate, the substrate was observed with an electron microscope, as a result, the outlines of nonspecifically-shaped macrostructures composed of platinum nanoparticles were obtained, as shown in Figure 13.

### INDUSTRIAL APPLICABILITY

As described hereinabove, the present invention relates to a technology for the multidimensional structuring of noble metals using an electrochemical reaction, and the present invention makes possible the synthesis and acquisition of self-supporting, microstructured noble metal nanostructures having a multidimensional structure of nanometer size comprising noble metal particles, which multidimensional structure is in the form of wire-shaped structures, or concave-and-convex structures. Noble metal electrodes having a high specific surface area, wiring, highly active catalysts, and so forth, can be fabricated and provided through the use of these microstructured noble metal nanostructures. Electrochemical reactors capable of high-efficiency nitrogen oxide decomposition, high-performance fuel cells, and high-sensitivity sensors can be provided through the use of electrodes comprising this nanostructure. The process of the present invention is useful because it can provide, without using a template, self-supporting, microstructured noble metal structures of nanometer size.

## Claims

1. A microstructured noble metal nanostructure having a multidimensional structure of nanometer size comprising primary particles synthesized, without the use of a template, through the dissolution and reprecipitation of a noble metal parent material which constitutes an electrode used in an electrochemical reaction that employs a solid electrolyte and a molten nitrate salt,
wherein:
1) the microstructured noble metal nanostructure comprises particles with diameters of 1 to 15 nm;
2) the multidimensional structure has a fine wire shape having a wire diameter of 5 to 200 nm, or a protruded structure or convex-and-concave structure having a surface roughness of 5 to 200 nm, or a spherical structure having a diameter of 5 to 200 nm; and
3) the multidimensional structure of nanometer size is formed in a self-supporting state; and
wherein the noble metal parent material has been dissolved and reprecipitated by the electrochemical reaction.

2. The microstructured noble metal nanostructure according to claim 1, wherein the noble metal is platinum, gold, palladium, or silver.

3. A process for producing the microstructured noble metal nanostructure defined in claim 1, which process comprises passing alternating electric current through a preliminarily arranged reaction element constituted by an electrode comprising a noble metal parent material which is to be microstructured, a counterelectrode, and an oxygen ion-conductive solid electrolyte layer, to produce, without the use of a template, a microstructured noble metal nanostructure having a multidimensional structure of nanometer size, and thereby microstructuring the surface or entire body of the noble metal parent material by reaction thereof at a reaction site in the element to be reacted,
wherein either a molten nitrate salt or a molten nitrate salt and oxygen ion conductor is used as the reaction site, and wherein said noble metal parent material undergoes dissolution and reprecipitation by the resultant electrochemical reaction.

4. The process for producing the microstructured noble metal nanostructure according to claim 3, wherein a microstructured noble metal nanostructure having a multidimensional structure of nanometer size is produced by passing alternating electric current through a reaction element that has two or more electrodes, at least one thereof comprising a noble metal parent material to be microstructured residing in contact with a reaction site, and that is constructed to be capable of electrical continuity through a conductor disposed between or among the electrodes, to thereby microstructure the surface or entire body of the noble metal parent material by reaction thereof at the reaction site in the element to be reacted.

5. The process for producing the microstructured noble metal nanostructure according to claim 3 or 4, wherein alternating electric current is passed through a reaction element that has two or more electrodes, at least one thereof comprising a noble metal parent material to be microstructured residing in contact with a reaction site, and that is constructed to be capable of electrical continuity through a conductor disposed between or among the electrodes, to thereby microstructure the noble metal parent material by reaction thereof at the reaction site in the element to be reacted and produce a microstructured noble metal nanostructure having a multidimensional structure of nanometer size at the noble metal parent material or at the surface of a different material disposed in proximity to the noble metal parent material electrode or at both locations.

6. The process for producing the microstructured noble metal nanostructure according to claim 3, 4 or 5, wherein the shape of the microstructure is controlled by changing the conditions of current passage for reaction.

7. The process for producing the microstructured noble metal nanostructure according to claim 3, 4 or 5, wherein the reaction is promoted by efficiently guiding the molten nitrate salt to the reaction site using a molten nitrate salt attractant material.

8. An electrochemical element for carrying out an electrochemical reaction on a target to be treated, comprising:
an ion conductor and two or more electrodes that are opposite each other with the ion conductor therebetween, which electrodes are composed of electrodes that use the microstructured noble metal nanostructure having a multidimensional structure of nanometer size comprising primary particles as defined in claim 1 or 2, and have, as a reaction site, an interface between the microstructured noble metal nanostructure and either a molten nitrate salt or a molten nitrate salt and an oxygen ion conductor.

9. The electrochemical element according to claim 8, which has at least one noble metal electrode that can increase the degradation capacity for a treatment target through an increase in reaction electrode porosity and reaction electrode surface area brought about by application of an electric field for operating the electrochemical element.

10. The electrochemical element according to claim 8 or 9, wherein the molten nitrate salt that constitutes or forms the reaction site also functions as a nitrogen oxide adsorptive substance.

11. The electrochemical element according to claim 9 or 10, wherein the molten nitrate salt is at least one selected from potassium nitrate, sodium nitrate, calcium nitrate, barium nitrate, silver nitrate, lead nitrate, ammonium nitrate, nickel nitrate and cobalt nitrate, and wherein sodium carbonate, potassium chlorate, or sodium peroxide is preferably added to the molten nitrate salt as a reaction promoter.

12. The electrochemical element according to claim 8 or 9, wherein a nitrogen oxide adsorptive substance is disposed within or adjacent to the microstructured noble metal nanostructure electrode.

13. The electrochemical element according to claim 10 or 12, wherein the nitrogen oxide adsorptive substance contains at least one kind selected from Na, K, Ba, Rb, Cs, and Ca and the content thereof is 5 to 50 mol% with respect to the total nitrogen oxide adsorptive substance.

14. An electrode material, comprising the microstructured noble metal nanostructure having a multidimensional structure of nanometer size defined in claim 1 or 2.

15. A catalyst material, comprising the microstructured noble metal nanostructure having a multidimensional structure of nanometer size defined in claim 1 or 2.

16. A nitrogen oxide conversion reactor, comprising an electrochemical reactor in which the electrochemical element defined in any one of claims 8 to 13 is disposed.

## Patentansprüche

1. Mikrostrukturierte Edelmetallnanostruktur mit mehrdimensionaler Struktur von Nanometergröße umfassend Primärteilchen, synthetisiert ohne die Verwendung einer Vorlage durch das Auflösen und Wiederausfällen eines Edelmetallausgangsmaterials, welches eine Elektrode bildet, die in einer elektrochemischen Reaktion verwendet wird, unter Benutzung eines Festelektrolyten und eines geschmolzenen Nitratsalzes, wobei:
1) die mikrostrukturierte Edelmetallnanostruktur Teilchen mit Durchmessern von 1 bis 15 nm umfasst;
2) die mehrdimensionale Struktur die Form eines feinen Drahts mit einem Drahtdurchmesser von 5 bis 200 nm hat, oder einer hervorstehenden Struktur oder einer konvexen-undkonkaven Struktur mit einer Oberflächenrauheit von 5 bis 200 nm, oder einer sphärischen Struktur mit einem Durchmesser von 5 bis 200 nm; und
3) die mehrdimensionale Struktur von Nanometergröße in einem selbsttragenden Zustand ausgebildet ist; und
wobei das Edelmetallausgangsmaterial durch die elektrochemische Reaktion aufgelöst und wiederausgefällt worden ist.

2. Mikrostrukturierte Edelmetallnanostruktur gemäß Anspruch 1, wobei das Edelmetall Platin, Gold, Palladium oder Silber ist.

3. Verfahren zur Herstellung der mikrostrukturierten Edelmetallnanostruktur definiert in Anspruch 1, wobei das Verfahren umfasst: Leiten elektrischen Wechselstroms durch ein vorbereitend angeordnetes Reaktionselement, gebildet durch eine Elektrode, umfassend ein Edelmetallausgangsmaterial, welches mikrostrukturiert werden soll, eine Gegenelektrode, und eine Sauerstoffionen leitende Festelektrolytschicht, um ohne die Verwendung einer Vorlage eine mikrostrukturierte Edelmetallnanostruktur mit mehrdimensionaler Struktur von Nanometergröße herzustellen, und dadurch die Oberfläche oder den gesamten Körper des Edelmetallausgangsmaterials zu mikrostrukturieren durch dessen Reaktion an einem Reaktionsort in dem zu reagierenden Element, wobei entweder ein geschmolzenes Nitratsalz oder ein geschmolzenes Nitratsalz und Sauerstoffionenleiter als der Reaktionsort verwendet wird, und wobei das Edelmetallausgangsmaterial durch die resultierende elektrochemische Reaktion Auflösung und Wiederausfällen unterzogen wird.

4. Verfahren zur Herstellung der mikrostrukturierten Edelmetallnanostruktur gemäß Anspruch 3, wobei eine mikrostrukturierte Edelmetallnanostruktur mit mehrdimensionaler Struktur von Nanometergröße hergestellt wird durch Leiten von elektrischem Wechselstrom durch ein Reaktionselement, welches zwei oder mehr Elektroden hat, wovon mindestens eine ein Edelmetallausgangsmaterial umfasst, das mikrostrukturiert wird in Kontakt bleibend mit dem Reaktionsort, und das ausgebildet ist, um geeignet zu sein für elektrische Kontinuität durch einen zwischen oder inmitten der Elektroden angeordneten Leiter, um dadurch die Oberfläche oder den gesamten Körper des Edelmetallausgangsmaterials durch dessen Reaktion an dem Reaktionsort in dem zu reagierenden Element zu mikrostrukturieren.

5. Verfahren zur Herstellung der mikrostrukturierten Edelmetallnanostruktur gemäß Anspruch 3 oder 4, wobei elektrischer Wechselstrom durch ein Reaktionselement geleitet wird, welches zwei oder mehr Elektroden hat, davon mindestens eine ein Edelmetallausgangsmaterial umfassend, das mikrostrukturiert wird in Kontakt bleibend mit dem Reaktionsort, und das ausgebildet ist, um geeignet zu sein für elektrische Kontinuität durch einen zwischen oder inmitten der Elektroden angeordneten Leiter, um dadurch das Edelmetallausgangsmaterial zu mikrostruktuueren durch dessen Reaktion an einem Reaktionsort in dem zu reagierenden Element und um eine mikrostrukturierte Edelmetallnanostruktur mit mehrdimensionaler Struktur von Nanometergröße zu produzieren auf dem Edelmetallausgangsmaterial oder auf der Oberfläche eines anderen Materials, angeordnet in der Nähe der Edelmetallausgangsmaterialelektrode oder an beiden Stellen.

6. Verfahren zur Herstellung der mikrostrukturierten Edelmetallnanostruktur gemäß Anspruch 3, 4 oder 5, wobei die Form der Mikrostruktur durch Änderungen der Bedingungen des Stromdurchgangs für die Reaktion gesteuert wird.

7. Verfahren zur Herstellung der mikrostrukturierten Edelmetallnanostruktur gemäß Anspruch 3, 4 oder 5, wobei die Reaktion durch effizientes Leiten des geschmolzenen Nitratsalzes zur Reaktionsstelle begünstigt wird unter Verwendung eines Materials, welches geschmolzenes Nitratsalz anzieht.

8. Ein elektrochemisches Element zur Durchführung einer elektrochemischen Reaktion an einem zu behandelnden Ziel, umfassend:
einen Ionenleiter und zwei oder mehr Elektroden, welche einander gegenüberstehen mit dem Ionenleiter dazwischen, wobei die Elektroden aus Elektroden bestehen, die die mikrostrukturierte Edelmetallnanostruktur mit einer mehrdimensionalen Struktur von Nanometergröße umfassend Primärteilchen, wie in Anspruch 1 oder 2 definiert, verwenden, und als eine Reaktionsstelle eine Schnittstelle zwischen der mikrostrukturierten Edelmetallnanostruktur und entweder einem geschmolzenen Nitratsalz oder einem geschmolzenen Nitratsalz und einem Sauerstoffionenleiter haben.

9. Elektrochemisches Element gemäß Anspruch 8, welches mindestens eine Edelmetallelektrode hat, welche die Abbaukapazität für ein Behandlungsziel erhöhen kann, durch eine Erhöhung der Reaktionselektrodenporosität und des Reaktionselektrodenoberflächenbereichs, realisiert durch Anwenden eines elektrischen Felds zum Betreiben des elektrochemischen Elements.

10. Elektrochemisches Element gemäß Anspruch 8 oder 9, wobei das geschmolzene Nitratsalz, welches den Reaktionsort darstellt oder bildet, auch als eine stickoxidadsorbierende Substanz wirkt.

11. Elektrochemisches Element gemäß Anspruch 9 oder 10, wobei das geschmolzene Nitratsalz mindestens eins ist, ausgewählt aus Kaliumnitrat, Natriumnitrat, Calciumnitrat, Bariumnitrat, Silbernitrat, Bleinitrat, Ammoniumnitrat, Nickelnitrat und Cobaltnitrat, und wobei als ein Reaktionsbeschleuniger vorzugsweise Natriumcarbonat, Kaliumchlorat, oder Natriumperoxid zu dem geschmolzenen Nitratsalz zugegeben wird.

12. Elektrochemisches Element gemäß Anspruch 8 oder 9, wobei eine stickoxidadsorbierende Substanz innerhalb oder in der Nähe der mikrostrukturierten Edelmetallnanostrukturelektrode angeordnet ist.

13. Elektrochemisches Element gemäß Anspruch 10 oder 12, wobei die stickoxidadsorbierende Substanz zumindest eine Art ausgewählt aus Na, K, Ba, Rb, Cs, und Ca enthält und deren Gehalt bezogen auf die gesamte stickoxidadsorbierende Substanz 5 bis 50 mol% beträgt.

14. Elektrodenmaterial, umfassend die mikrostrukturierte Edelmetallnanostruktur mit mehrdimensionaler Struktur von Nanometergröße definiert in Anspruch 1 oder 2.

15. Katalysatormaterial, umfassend die mikrostrukturierte Edelmetallnanostruktur mit mehrdimensionaler Struktur von Nanometergröße definiert in Anspruch 1 oder 2.

16. Stickoxidumwandlungsreaktor, umfassend einen elektrochemischen Reaktor, in welchem das elektrochemische Element, wie in einem der Ansprüche 8 bis 13 definiert, angeordnet ist.

## Revendications

1. Nanostructure en métal noble microstructuré, présentant une structure multidimensionnelle de taille nanométrique, comprenant des particules primaires synthétisées, sans recours à une matrice, par dissolution et reprécipitation d'un matériau parent métal noble constituant une électrode utilisée dans une réaction électrochimique où sont utilisés un électrolyte solide et un sel nitrate fondu,
étant entendu que
1) la nanostructure en métal noble microstructuré comprend des particules de 1 à 15 nm de diamètres ;
2) la structure multidimensionnelle a la forme d'un fil fin, de 5 à 200 nm de diamètre, ou bien d'une structure à saillies ou d'une structure convexe/concave présentant une rugosité superficielle de 5 à 200 nm, ou bien d'une structure sphérique de 5 à 200 nm de diamètre ;
3) et la structure multidimensionnelle de taille nanométrique est formée dans un état d'auto-portance ;
et que le matériau parent métal noble a été dissous et reprécipité lors de la réaction électrochimique.

2. Nanostructure en métal noble microstructuré, conforme à la revendication 1, dans laquelle le métal noble est du platine, de l'or, du palladium ou de l'argent.

3. Procédé de production d'une nanostructure en métal noble microstructuré conforme à la revendication 1, lequel procédé comporte le fait de faire passer un courant électrique alternatif dans un élément de réaction préparé au préalable et constitué d'une électrode comprenant un matériau parent métal noble à microstructurer, d'une contre-électrode et d'une couche d'électrolyte solide conducteur par ions oxygène, pour produire, sans avoir recours à une matrice, une nanostructure en métal noble microstructuré, présentant une structure multidimensionnelle de taille nanométrique, et par là, microstructurer la surface ou le corps entier en matériau parent métal noble par réaction de celui-ci en un site de réaction de l'élément où doit avoir lieu la réaction,
dans lequel on utilise en tant que site de réaction soit un sel nitrate fondu, soit un sel nitrate fondu et un conducteur par ions oxygène, et dans lequel ledit matériau parent métal noble subit une dissolution et une reprécipitation lors de la réaction électrochimique résultante.

4. Procédé de production d'une nanostructure en métal noble microstructuré, conforme à la revendication 3, dans lequel on produit une nanostructure en métal noble microstructuré, présentant une structure multidimensionnelle de taille nanométrique, en faisant passer un courant électrique alternatif dans un élément de réaction qui comporte deux électrodes ou plus, dont l'une au moins comprend un matériau parent métal noble à microstructurer situé au contact d'un site de réaction, et qui est construit de manière à ce qu'il puisse y avoir une continuité électrique à travers un conducteur disposé entre les électrodes ou parmi celles-ci, pour ainsi microstructurer la surface ou le corps entier du matériau parent métal noble par réaction de celui-ci en le site de réaction de l'élément où doit avoir lieu la réaction.

5. Procédé de production d'une nanostructure en métal noble microstructuré, conforme à la revendication 3 ou 4, dans lequel on fait passer un courant électrique alternatif dans un élément de réaction qui comporte deux électrodes ou plus, dont l'une au moins comprend un matériau parent métal noble à microstructurer situé au contact d'un site de réaction, et qui est construit de manière à ce qu'il puisse y avoir une continuité électrique à travers un conducteur disposé entre les électrodes ou parmi celles-ci, pour ainsi microstructurer la surface ou le corps entier du matériau parent métal noble par réaction de celui-ci en le site de réaction de l'élément où doit avoir lieu la réaction et produire une nanostructure en métal noble microstructuré présentant une structure multidimensionnelle de taille nanométrique au niveau du matériau parent métal noble ou à la surface d'un matériau différent, disposé à proximité de l'électrode en matériau parent métal noble, ou en ces deux endroits.

6. Procédé de production d'une nanostructure en métal noble microstructuré, conforme à la revendication 3, 4 ou 5, dans lequel on maîtrise la forme de la microstructure en modifiant les conditions de passage du courant pour la réaction.

7. Procédé de production d'une nanostructure en métal noble microstructuré, conforme à la revendication 3, 4 ou 5, dans lequel on favorise la réaction en dirigeant efficacement le sel nitrate fondu vers le site de réaction, grâce à un matériau attracteur de sel nitrate fondu.

8. Elément électrochimique conçu pour mettre en oeuvre une réaction électrochimique sur une cible à traiter, comportant un conducteur par ions et deux électrodes ou plus, qui sont disposées en face les unes des autres avec le conducteur par ions placé entre elles, lesquelles électrodes sont des électrodes qui comportent une nanostructure en métal noble microstructuré, présentant une structure multidimensionnelle de taille nanométrique et comprenant des particules primaires, telle que définie dans la revendication 1 ou 2, et qui ont comme site de réaction un interface entre la nanostructure en métal noble microstructuré et soit un sel nitrate fondu, soit un sel de nitrate fondu et un conducteur par ions oxygène.

9. Elément électrochimique conforme à la revendication 8, qui comporte au moins une électrode en métal noble qui peut offrir un pouvoir accru de dégradation d'une cible de traitement, grâce à une augmentation de la porosité de l'électrode de réaction et de l'aire spécifique de l'électrode de réaction, réalisée par application d'un champ électrique pour le fonctionnement de l'élément électrochimique.

10. Elément électrochimique conforme à la revendication 8 ou 9, dans lequel le sel nitrate fondu qui constitue ou forme le site de réaction joue également le rôle de substance adsorbant les oxydes d'azote.

11. Elément électrochimique conforme à la revendication 9 ou 10, dans lequel le sel nitrate fondu est au moins un sel choisi parmi les suivants : nitrate de potassium, nitrate de sodium, nitrate de calcium, nitrate de baryum, nitrate d'argent, nitrate de plomb, nitrate d'ammonium, nitrate de nickel et nitrate de cobalt, et dans lequel est de préférence ajouté au sel nitrate fondu, en guise de promoteur de la réaction, du carbonate de sodium, du chlorate de potassium ou du peroxyde de sodium.

12. Elément électrochimique conforme à la revendication 8 ou 9, dans lequel une substance adsorbant les oxydes d'azote est disposée au dedans ou à côté de l'électrode à nanostructure en métal noble microstructuré.

13. Elément électrochimique conforme à la revendication 10 ou 12, dans lequel la substance adsorbant les oxydes d'azote com-porte au moins un élément choisi parmi les sodium, potassium, baryum, rubidium, césium et calcium, et la teneur en cet ou ces élément(s) vaut de 5 à 50 % en moles par rapport à toute la substance adsorbant les oxydes d'azote.

14. Matière d'électrode comprenant une nanostructure en métal noble microstructuré, présentant une structure multidimensionnelle de taille nanométrique, conforme à la revendication 1 ou 2.

15. Matériau catalyseur comprenant une nanostructure en métal noble microstructuré, présentant une structure multidimensionnelle de taille nanométrique, conforme à la revendication 1 ou 2.

16. Réacteur de conversion d'oxydes d'azote, comprenant un réacteur électrochimique dans lequel est disposé un élément électrochimique conforme à l'une des revendications 8 à 13.
